# EUROPÄISCHE PATENTSCHRIFT

(11) **EP 1 318 101 B1**
(45) Veröffentlichungstag und Bekanntmachung des Hinweises auf die Patenterteilung: **04.10.2006**
(21) Anmeldenummer: 02027545.9
(22) Anmeldetag: 09.12.2002
(51) Int. Cl.: C01B 7/07, B01D 53/14, B01D 53/18

(54) **Verfahren zur Herstellung von weitgehend HBr-freiem HCI-Gas und weitgehend HBr-freier wässriger HCI-Lösung**
Process for the production of substantially HBr-free HCl gas and a substantially HBr-free aqueous HCl-solution
Procédé de production d'un gaz de HCl sensiblement exempt de HBr et d'une solution aqueuse de HCl sensiblement exempte de HBr

(30) Priorität: 10.12.2001 DE 10160598
(43) Veröffentlichungstag der Anmeldung: 11.06.2003
(73) Patentinhaber: BASF Aktiengesellschaft, 67056 Ludwigshafen (DE)
(72) Erfinder: Schläfer, Dieter, Dr., 67071 Ludwigshafen (DE); Guth, Josef, 67251 Freinsheim (DE); Schlimper, Hans-Ulrich, Dr., 24 67373 Dudenhofen (DE)
(74) Vertreter: Isenbruck, Günter

(56) Entgegenhaltungen:
- WO-A-01/25144
- DE-A- 1 567 494
- US-A- 5 846 387

## Beschreibung

Die Erfindung betrifft ein Verfahren zur Herstellung von weitgehend HBr-freiem HCl-Gas und weitgehend HBr-freier wäßriger HCl-Lösung, wobei der HBr-Gehalt im HCl-Gas beziehungsweise in der wässrigen Lösung unter 10 ppm liegt.

Wäßrige HCl-Lösung (wäßrige Salzsäure), die in der Halbleiterindustrie eingesetzt werden soll, darf nur einen extrem geringen Gehalt an HBr sowie an anderen Verunreinigungen wie beispielsweise Chlor und Metallchloriden aufweisen. Bei der Herstellung von elektronischen Bauteilen wirkt sich nämlich der Einbau von nicht-erwünschten Fremdatomen in die Bauteile besonders störend aus.

In dem Verfahren der WO 01/25144 wird dieses Ziel dadurch erreicht, dass HCl-Gas aus einer wäßrigen Salzsäure mit einem HCl-Gehalt von mehr als 21 Gew.-% durch Erhitzen ausgetrieben, das so gewonnene HCl-Gas über eine Retentionskolonne und einen Aerosolabscheider, welche aus fluoriertem oder perfluoriertem Polyolefin bestehen, geführt, und dieses HCl-Gas anschließend in einer Absorptionskolonne in Reinstwasser gelöst wird. Die so gewonnene Salzsäure hat einen Anteil von HBr < 1ppm. Dieses Verfahren ist jedoch durch den Destillationsschritt sehr energieaufwendig. Zudem fällt verdünnte Salzsäure in großer Menge an.

Die US 5,846,387 beschreibt ein ebenfalls energieaufwendiges Verfahren, in dem HCl-Gas aus einem Vorratsbehälter mit wasserfreiem HCl-Gas entnommen oder aus wässriger Salzsäure ausgetrieben wird und in einer Packungskolonne Wasser mit niedrigem pH-Wert, vorzugsweise wässriger Salzsäure, entgegen strömt. Durch diese Gaswäsche lassen sich Verunreinigungen wie Metalloxide, -carbonate, -hydride, -halogenide von Übergangsmetallen und Metallen der ersten, zweiten und dritten Hauptgruppe abtrennen, sowie Phosphor-/Arsen-/Antimon-halogenide und -hydride. Anschließend wird das so gereinigte HCl-Gas teilweise in reines, vorzugsweise deionisiertes, Wasser geleitet, um für die Anwendung in der Halbleiterindustrie geeignete Salzsäure zu erhalten. Zwischen diese einzelnen Schritte können Destillationsschritte geschalten sein. Die Entfernung von HBr wird nicht erwähnt.

Aufgabe der vorliegenden Erfindung ist es nun, ein einfaches und preiswertes Verfahren zur Herstellung von weitgehend HBr-freiem HCl-Gas sowie weitgehend HBr-freier wäßriger HCl-Lösung bereitzustellen, durch welches die Nachteile des Standes der Technik vermieden werden.

Die Aufgabe wird erfindungsgemäß gelöst durch ein Verfahren zur Herstellung von weitgehend HBr-freiem HCl-Gas oder weitgehend HBr-freier wäßriger HCl-Lösung, wobei der HBr-Gehalt im HCl-Gas beziehungsweise in der wässrigen Lösung unter 10 ppm liegt , das folgende Schritte aufweist:
a) Bereitstellen von HBr-haltigem HCl-Gas;
b) Leiten des HBr-haltigen HCl-Gases durch an HCl gesättigte wäßrige HCl-Lösung;
c) Abtrennen von HBr-haltiger an HCl gesättigter wäßriger HCl-Lösung;
d) gegebenenfalls Leiten des in Schritt b) erhaltenen weitgehend HBr-freien HCl-Gases in Wasser zur Gewinnung von weitgehend HBr-freier wäßriger HCl-Lösung;
wobei gegebenenfalls in Schritt d) erzeugte weitgehend HBr-freie wäßrige HCl-Lösung in Schritt b) des Verfahrens geführt wird.

Durch das erfindungsgemäße Verfahren ist es möglich, wäßrige HCl-Lösung herzustellen, welche den hohen Reinheitsanforderungen bei Verwendung in der Halbleiterindustrie genügt. Der HBr-Gehalt des durch das erfindungsgemäße Verfahren gewonnenen HCl-Gases bzw. der wäßrigen HCl-Lösung liegt im allgemeinen unter 10 ppm, bevorzugt unter 2 ppm, besonders bevorzugt unter 1 ppm. Durch den Reinigungsschritt b) werden ebenfalls Kationen und Chlor entfernt, so daß der Gehalt an Kationen in der erfindungsgemäß gewonnenen weitgehend HBr-freien HCl-Lösung unter 10 ppm, bevorzugt unter 1 ppm, und der Cl₂-Gehalt der erfindungsgemäß gewonnenen weitgehend HBr-freien HCl-Lösung unter 5 ppm, bevorzugt unter 0,5 ppm, liegt. Die einzelnen Schritte des erfindungsgemäßen Verfahren werden nun im einzelnen näher erläutert.

### Schritt a)

Das HBr-haltige HCl-Gas kann nach jedem beliebigen, aus dem Stand der Technik bekannten Verfahren hergestellt werden. So ist es möglich, HCl-Gas durch Synthese aus den Elementen Wasserstoff und Chlor, durch Umsetzung von Metallchloriden (insbesondere Natriumchlorid) mit Schwefelsäure oder Hydrogensulfat, als Nebenprodukt bei der Chlorierung von Kohlenwasserstoffen, durch thermische Zersetzung von hydratisierten Schwermetallchloriden oder durch Verbrennung von Cl₂-haltigem organischem Abfall zu gewinnen, sofern in den Ausgangsmaterialien Spuren von Brom vorhanden sind.

Bevorzugt wird HCl-Gas verwendet, welches aus den Elementen Wasserstoff und Chlor hergestellt wurde, wobei das Chlor insbesondere aus der Chloralkalielektrolyse nach dem Amalgam-, Diaphragma- oder Membranverfahren stammt. Besonders bevorzugt wird HCl-Gas verwendet, welches durch Umsetzung von Chlor mit einem 20 Mol%-igen Wasserstoff-Überschuss hergestellt wurde.

Je nach Ausgangsmaterial kann der HBr-Gehalt des HCl-Gases 30 bis 2000 ppm betragen.

### Schritt b)

Die Sättigung einer wäßrigen Lösung an HCl ist temperaturabhängig. Beispielsweise kann bei Raumtemperatur ein Sättigungsgrad von 40% erreicht werden, d.h. daß die wäßrige Lösung einen HCl-Gehalt an 40 Gew.-% hat. Unter an HCl gesättigter wäßriger HCl-Lösung (gesättigter wäßriger Salzsäure) versteht man im Rahmen der Erfindung eine wäßrige Lösung, welche von 35 bis 40 Gew.-% HCl bei Temperaturen von 20 bis 30°C enthält.

Die in Schritt b) eingesetzte, an HCl gesättigte wäßrige HCl-Lösung kann prinzipiell bereits einen gewissen Anteil an HBr enthalten, jedoch darf die Sättigungsgrenze für HBr noch nicht erreicht sein. Bevorzugt wird eine an HCl gesättigte wäßrige HCl-Lösung eingesetzt, deren HBr-Gehalt unter 10 ppm liegt. Besonders bevorzugt wird eine in Schritt d) des Verfahrens gewonnene an HCl gesättigte wäßrige HCl-Lösung eingesetzt.

Während das HBr-haltige HCl-Gas im allgemeinen Umgebungstemperatur, also eine Temperatur von 10 bis 30°C aufweist, hat die zugeführte an HCl gesättigte wäßrige HCl-Lösung im allgemeinen eine Temperatur von 30 bis 35°C. D. h. die Reinigung vollzieht sich im allgemeinen bei Temperaturen von 30 bis 40°C.

Das HBr-haltige HCl-Gas wird im allgemeinen mit einem leichten Überdruck von 80 bis 100 mbar in das in Schritt b) eingesetzte Reaktionsgefäß geleitet.

Das HBr-haltige HCl-Gas lässt sich sowohl im Gleich-, als auch im Gegenstrom durch die an HCl gesättigte wäßrige HCl-Lösung leiten. Bevorzugt jedoch wird das HBr-haltige HCl-Gas im Gegenstrom durch die an HCl gesättigte wäßrige HCl-Lösung geleitet.

Schritt b) des Verfahrens läßt sich insbesondere in jeder beliebigen Bodenkolonne durchführen. Besonders bevorzugt werden Siebbodenkolonnen eingesetzt, ganz besonders bevorzugt solche, deren Siebböden im wesentlichen aus Polymeren wie Polyvinylidenfluorid, Polyvinylchlorid, Polyvinylacetat, Polytetrafluorethylen, Perfluoralkoxypolymeren, deren Copolymeren oder deren Mischungen bestehen. Bevorzugt von den genannten Polymeren sind Polyvinylidenfluorid und Perfluoralkoxypolymere.

Setzt man Packungskolonnen oder Füllkörperkolonnen ein, deren druckverlustarme Pakkungen bzw. Füllkörper (Raschigringe, Pallringe, Melapak® der Firma Sulzer in Winterthur/Schweiz) im wesentlichen aus den vorstehend genannten Polymeren bestehen, so ist nicht gewährleistet, dass die Oberflächen dieser Packungen bzw. Füllkörper vollständig benetzt werden. Dadurch würde jedoch der Wirkungsgrad deutlich verschlechtert und als Ausgleich müßte die Menge der zugeführten an HCl gesättigten wäßrigen HCl-Lösung erhöht werden.

Demgegenüber ist bei Siebbodenkolonnen mit Böden auf Basis von Polymeren sichergestellt, dass auch bei geringen Flüssigkeitsbelastungen eine effiziente Waschung erfolgt. Aus diesem Grund müssen Siebbodenkolonnen im Vergleich zu Füllkörper- oder Pakkungskolonnen nicht so hoch gebaut werden wie die entsprechenden Füllkörper- oder Pakkungskolonnen, um denselben Effekt zu erzielen. Siebbodenkolonnen sind daher auch von den Investitionskosten her günstiger.

Zur Minimierung des Verbrauchs an an HCl gesättigter wäßriger HCl-Lösung wird die Kolonne im allgemeinen bei einer Flüssigkeitsbelastung unter 2 m³ an HCl gesättigte wäßrige HCl-Lösung pro m² Kontaktoberfläche und pro Stunde betrieben, bevorzugt bei einer Flüssigkeitsbelastung unter 1,5 m³/m²•h, besonders bevorzugt bei einer Flüssigkeitsbelastung ≤ 1 m³/m²•h.

Bei Einsatz von Siebbodenkolonnen wird das HBr-haltige HCl-Gas im allgemeinen im unteren Drittel der Kolonne eingeleitet, während die an HCl gesättigte wäßrige HCl-Lösung im oberen Drittel der Kolonne zugeführt wird. Bevorzugt wird das HBr-haltige HCl-Gas unter dem untersten Siebboden und über dem Sumpfablauf zugeführt und/oder die an HCl gesättigte wäßrige HCl-Lösung über dem obersten Siebboden eingeleitet.

In einer ganz besonders bevorzugten Ausführungsvariante werden Siebbodenkolonnen mit mindestens 8 Böden eingesetzt.

Wird eine derartige Kolonne zur Durchführung von Schritt b) zum ersten Mal in Betrieb genommen, so wird die an HCl gesättigte wäßrige HCl-Lösung erst in situ erzeugt, indem auf die Kolonne Wasser statt an HCl gesättigter wäßriger HCl-Lösung gegeben wird. Das HCl-Gas löst sich dann in dem Wasser, bis eine an HCl gesättigte wäßrige HCl-Lösung erhalten wird. Ab dem Zeitpunkt, ab dem eine an HCl gesättigte wäßrige HCl-Lösung vorliegt, wird das HCl-Gas im wesentlichen ohne Absorption durch die Lösung strömen. Im Fall des Einsatzes von Wasser anstelle von an HCl gesättigter wäßriger HCl-Lösung werden zusätzliche Kühlelemente an der Kolonne eingesetzt.

Dem in Schritt b) eingesetzten Reaktionsgefäß, insbesondere einer Siebbodenkolonne, nachgeschaltet ist ein Tröpfchenabscheider. Dieser kann sowohl als separates Bauteil ausgestaltet als auch in den Kopf der Siebbodenkolonne integriert sein. In einer bevorzugten Ausführungsvariante ist er in den Kopf der Siebbodenkolonne integriert. Üblicherweise werden für den Tröpfchenabscheider dieselben Materialien verwendet wie für die Siebböden, also im wesentlichen Polymere wie Polyvinylidenfluorid, Polyvinylchlorid, Polyvinylacetat, Polytetrafluorethylen, Perfluoralkoxypolymeren, deren Copolymere oder deren Mischungen.

### Schritt c)

HBr löst sich sehr gut in an HCl gesättigter wäßriger HCl-Lösung, während HCl-Gas durch die an HCl gesättigte wäßrige HCl-Lösung strömt - im wesentlichen ohne weiter absorbiert zu werden. HBr-haltige an HCl gesättigte wäßrige HCl-Lösung sammelt sich am Sumpf der Kolonne an, und wird dort kontinuierlich oder von Zeit zu Zeit entfernt. Bevorzugt ist die kontinuierliche Entfernung. Wird die HBr-haltige an HCl gesättigte wäßrige HCl-Lösung diskontinuierlich entfernt, so muß dies spätestens dann erfolgen, wenn die an HCl gesättigte wäßrige HCl-Lösung an HBr gesättigt ist. Die HBr-haltige an HCl gesättigte wäßrige HCl-Lösung kann noch für Anwendungen eingesetzt werden, bei denen nur ein technischer Grad der Lösung erforderlich ist.

Durch die Schritte b) und c) lässt sich HCl-Gas, dessen HBr-Gehalt unter 10 ppm (mg HBr pro Kg wäßrige HCl-Lösung), bevorzugt unter 2 ppm, besonders bevorzugt unter 1 ppm, liegt, gewinnen. Mit dem erfindungsgemäßen Verfahren ist es auch möglich, das HBr aus dem HCl-Gas soweit zu entfernen, daß der HBr-Gehalt unter der analytischen Nachweisgrenze von 0,2 ppm (Ionenchromatographie) liegt. Dieses HCl-Gas bzw. diese wäßrige HCl-Lösung kann für beliebige Anwendungen, die eine solche Reinheit erfordern, insbesondere für solche Anwendungen in der Halbleiterindustrie, eingesetzt werden.

### Schritt d)

Das weitgehend HBr-freie HCl-Gas wird am Kopf der in Schritt b) und c) eingesetzten Kolonne entnommen und dann in einem Reaktionsgefäß in Wasser geleitet, um weitgehend HBr-freie wäßrige HCl-Lösung zu gewinnen. Hierbei hat das HBr-haltige HCl-Gas im allgemeinen einen leichten Überdruck von 30 bis 70 mbar.

Bevorzugt wird in Schritt d) eine Absorptionskolonne eingesetzt, insbesondere eine Füllkörper- oder Packungskolonne, deren Innenbau insbesondere im wesentlichen aus Polymeren wie Polyvinylidenfluorid, Polyvinylchlorid, Polyvinylacetat, Polytetrafluorethylen, Perfluoralkoxypolymeren, deren Copolymere oder deren Mischungen besteht. In einer ganz besonders bevorzugten Ausführungsvariante wird eine mit Pallringen aus Polyvinylidenfluorid gefüllte Füllkörperkolonne eingesetzt. Als Füllung sind jedoch auch andere dem Fachmann bekannte druckverlustarme Gebilde geeignet. Dadurch kann eine möglichst große Oberfläche zur guten Verteilung der Flüssigkeit bei gleichzeitig geringem Druckverlust gewährleistet werden.

Auch in Schritt d) wird das HCl-Gas bevorzugt im Gegenstrom dem Wasser zugeführt. Das HCl-Gas wird besonders bevorzugt im unteren Drittel der Absorptionskolonne eingeführt, während das Wasser im oberen Drittel der Absorptionskolonne zugeleitet wird.

Wird mit dem erfindungsgemäßen Verfahren wäßrige HCl-Lösung für den Einsatz in der Halbleiterindustrie hergestellt, so wird in Schritt d) das weitgehend HBr-freie HCl-Gas in Reinstwasser geleitet. Unter Reinstwasser versteht man Wasser, das in einer Ionenaustauscheranlage speziell aufgereinigt, insbesondere weitgehend deionisiert, wurde.

Durch das erfindungsgemäße Verfahren lässt sich weitgehend HBr-freie wäßrige HCl-Lösung beliebiger Konzentration herstellen.

Der Siedepunkt von wäßriger HCl-Lösung ist vom HCl-Gehalt der Lösung abhängig; mit zunehmendem Gehalt an HCl sinkt der Siedepunkt. Soll weitgehend HBr-freie wäßrige HCl-Lösung mit einer Konzentration ≥ 30 Gew.-% hergestellt werden, so hat es sich daher als vorteilhaft erwiesen, aufgrund der exothermen Wärmetönung im mittleren Bereich oder der unteren Hälfte der Absorptionskolonne Flüssigkeit zu entnehmen, die entnommene Flüssigkeit zu kühlen und die gekühlte Flüssigkeit der Absorptionskolonne weiter unten wieder zuzuführen. Bei den zur Herstellung der Absorptionskolonne verwendeten Polymermaterialien ist der übliche, in die Absorptionskolonne integrierte Einbau eines Kühlers nicht möglich. Die Kühlung wird über einen externen kostengünstigen Kühler durchgeführt. Zur Entnahme von Flüssigkeit aus der Absorptionskolonne werden insbesondere im mittleren Bereich oder der unteren Hälfte der Absorptionskolonne zwei Verteilerböden eingebaut. Die warme Flüssigkeit wird dann über dem obersten der beiden Verteilerböden entnommen, während die abgekühlte Flüssigkeit dann über dem untersten der beiden Verteilerböden der Absorptionskolonne wieder zugeführt wird. Durch diese Vorgehensweise können aufwendige Kühlelemente im oberen Bereich der Absorptionskolonne eingespart werden, wodurch die Investitionskosten für eine Anlage zur Durchführung des erfindungsgemäßen Verfahrens sinken.

Das gewünschte Wertprodukt, die weitgehend HBr-freie wäßrige HCl-Lösung, wird nach Erreichen der gewünschten Konzentration dem Sumpf der Absorptionskolonne entnommen. Die Abgase werden dem Kopf der Absorptionskolonne entnommen und vorteilhafterweise nach ihrer Kühlung und Leiten durch eine nachgeschaltete zweite Absorptionskolonne abgeführt.

Wird in Schritt d) des Verfahrens an HCl gesättigte wäßrige HCl-Lösung hergestellt, so kann ein Teil dieser Lösung vorteilhafterweise in Schritt b) des Verfahrens verwendet werden. Hierbei wird die an HCl gesättigte wäßrige HCl-Lösung, bevorzugt auf Temperaturen unter 30°C gekühlt.

Die Temperaturen in der Absorptionskolonne liegen üblicherweise zwischen 30 und 110°C, bevorzugt zwischen 60 und 108°C.

Eine Vorrichtung zur Durchführung des erfindungsgemäßen Verfahrens weist folgende Einrichtungen auf:
i) eine Bodenkolonne zum Waschen des HBr-haltigen HCl-Gases mit an HCl gesättigter wäßriger HCl-Lösung;
ii)einen Tröpfchenabscheider;
iii)eine Reinigungseinrichtung zur Herstellung von Reinstwasser;
iv) eine Absorptionskolonne zur Umsetzung des in der Bodenkolonne i) gereinigten weitgehend HBr-freien HCl-Gases mit dem in der Reinigungseinrichtung iii) gewonnenen Reinstwassers zu weitgehend HBr-freier wäßriger HCl-Lösung,
sowie Leitungen zwischen den einzelnen Einrichtungen.

Die Einrichtungen i), ii) und iv) wurden bereits vorstehend beschrieben, die Bodenkolonne und der Tröpfchenabscheider bei Schritt b), die Absorptionskolonne bei Schritt d).

Bei der Reinigungseinrichtung zur Gewinnung des Reinstwassers handelt es sich um eine Ionenaustauscheranlage.

Die Leitungen zwischen den einzelnen Einrichtungen bestehen im allgemeinen aus denselben Materialien wie die Siebboden- und die Absorptionskolonne, also aus säureresistenten Polymeren wie Polyvinylidenfluorid, Polyvinylchlorid, Polyvinylacetat, Polytetrafluorethylen, Perfluoralkoxypolymeren, deren Copolymeren oder deren Mischungen.

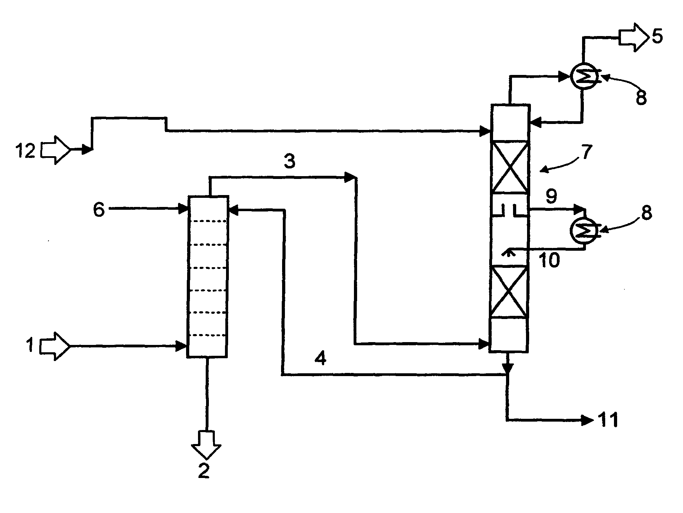

Die anliegende Zeichnung zeigt in
- Figur 1: schematisch eine Anlage, in der das erfindungsgemäße Verfahren zur Herstellung von weitgehend HBr-freier wäßrige HCl-Lösung bevorzugt durchgeführt wird.

In einer ersten Kolonne 6 (Siebbodenkolonne mit 8 Böden) wird über Leitung 1 von unten HBr-haltiges HCl-Gas mit einer Temperatur von 10 bis 30°C (Umgebungstemperatur) und einem leichten Überdruck von 50 bis 100 mbar eingeführt, und von - über eine Leitung 4 von oben in die Kolonne geführter - an HCl gesättigter wäßriger HCl-Lösung mit einer Temperatur von 30 bis 35°C berieselt.

Da sich HBr besonders gut in an HCl gesättigter wäßriger HCl-Lösung löst, sammelt sich diese durch HBr verunreinigte an HCl gesättigte wäßrige HCl-Lösung am Sumpf der Kolonne an, wo sie durch eine Leitung 2 kontinuierlich abgeführt werden kann. Die so mit HBr verunreinigte an HCl gesättigte wäßrige HCl-Lösung ist noch für Anwendungen geeignet, in denen technische Salzsäure eingesetzt werden kann.

Das durch Waschen mit an HCl gesättigter wäßriger HCl-Lösung weitgehend HBr-freie HCl-Gas mit einer Temperatur, die üblicherweise 5°C höher als die Umgebungstemperatur ist, und einem Überdruck von 30 bis 70 mbar wird über eine Leitung 3 dem Kopf der Kolonne 6 entnommen und von unten in eine zweite Kolonne 7 (Absorptionskolonne) eingeleitet.

Reinstwasser mit einer Temperatur von 20 bis 30°C wird über eine Leitung 12 von oben in die Kolonne gegeben und strömt dem HCl-Gas entgegen. Die Temperatur in der Kolonne 7 liegt im allgemeinen zwischen 30 und 110°C.

Soll wäßrige HCl-Lösung mit einem HCl-Gehalt ≥ 30 Gew.-% hergestellt werden, so wird kontinuierlich über einen Seitenabzug 9 Flüssigkeit der Kolonne 7 entnommen, über einen Wärmetauscher 8 gekühlt, und über eine Seitenzufuhr, welche bevorzugt etwas unterhalb des Entnahmepunktes liegt, wieder der Kolonne 7 zugeführt.

Das gewünschte Wertprodukt, die weitgehend HBr-freie wäßrige HCl-Lösung, wird über eine Leitung 11 dem Sumpf der Kolonne 7 entnommen und gegebenenfalls gekühlt, wobei ein Teil der entnommenen und gegebenenfalls gekühlten wäßrigen HCl-Lösung - sofern sie an HCl gesättigt ist - in die Leitung 4 zum Waschen des HBr-haltigen HCl-Gases abgeführt wird.

Die Abgase werden dem Kopf der Kolonne entnommen, über einen Wärmetauscher 8 kondensiert, teilweise der Absorptionskolonne rückgeführt, teilweise aber über eine Leitung 5 einer weiteren Absorptionskolonne zugeführt, und nach erneutem Waschen mit Wasser in die Umwelt entlassen.

Das nachfolgende Ausführungsbeispiel erläutert die Erfindung zusätzlich.

### Ausführungsbeispiel

In eine Siebbodenkolonne mit einem Durchmesser von 400 mm, einer Höhe von 6000 mm und mit 8 Böden aus Polyvinylidenfluorid werden unterhalb des ersten Bodens pro Stunde 350 kg HBr-haltiges HCl-Gas, welches durch Umsetzung von Wasserstoff und Chlor mit einem 20 Mol-%igem H₂-Überschuss erhalten wurde, eingeleitet. Der HBr-Gehalt dieses HCl-Gases liegt bei ca. 215 mg Brom als HBr pro kg HCl-Gas (215 ppm). Oberhalb des fünften Bodens werden pro Stunde 141 kg 36 Gew.-%ige wäßrige HCl-Lösung mit einem HBr-Gehalt unter 1 ppm in die Siebbodenkolonne eingeleitet. Die am Sumpf der Siebbodenkolonne entnommene verunreinigte wäßrige HCl-Lösung weist einen Gehalt von 40,6 Gew.-% an HCl auf, sowie einen Brom-Gehalt (HBr) von 473 ppm. Das am Kopf der Kolonne abgeführte HCl-Gas weist einen HBr-Gehalt unter 1 ppm auf und wird von unten in eine Absorptionskolonne mit einem Durchmesser von 400 mm und einer Höhe von 8000 mm geleitet. Reinstwasser wird in einer Menge von 6001 pro Stunde von oben auf die Absorptionskolonne gegeben. Im unteren Drittel der Absorptionskolonne wird kontinuierlich Flüssigkeit mit einer Temperatur von 74 bis 78°C aus der Absorptionskolonne entnommen. Nach Kühlen der Flüssigkeit auf 5 bis 6°C wird sie der Absorptionskolonne an einem Punkt, der etwas tiefer liegt als der Entnahmepunkt, der Absorptionskolonne wieder zugeführt. Am Sumpf der Absorptionskolonne wird das gewünschte Wertprodukt, die wäßrige HCl-Lösung mit einem HCl-Gehalt von 36 Gew.-% und einem HBr-Gehalt unter 1 ppm, entnommen.

### Bezugszeichenliste

- 1: HBr-haltiges HCl-Gas
- 2: an HBr angereicherte, an HCl gesättigte wäßrige HCl-Lösung
- 3: weitgehend HBr-freies HCl-Gas
- 4: Rückfuhr von an HCl gesättigter wäßriger HCl-Lösung
- 5: Abgas
- 6: Kolonne 1 (Bodenkolonne)
- 7: Kolonne 2 (Absorptionskolonne)
- 8: Wärmetauscher/Kühlvorrichtung
- 9: Entnahme von warmer wäßriger HCl-Lösung
- 10: Zufuhr von gekühlter wäßriger HCl-Lösung
- 11: Ablauf für weitgehend HBr-freie wäßrige HCl-Lösung
- 12: Zufuhr von Reinstwasser

## Patentansprüche

1. Verfahren zur Herstellung von HCl-Gas oder wäßriger HCl-Lösung, wobei der HBr-Gehalt im HCl-Gas beziehungsweise in der wässrigen HCl-Lösung unter 10 ppm liegt und das Verfahren folgende Schritte aufweist:
a) Bereitstellen von HBr-haltigem HCl-Gas;
b) Leiten des HBr-haltigen HCl-Gases durch an HCl gesättigte wäßrige HCl-Lösung;
c) Abtrennen von HBr-haltiger an HCl gesättigter wäßriger HCl-Lösung;
d) gegebenenfalls Leiten des in Schritt b) erhaltenen weitgehend HBr-freien HCl-Gases in Wasser zur Gewinnung von weitgehend HBr-freier wäßriger HCl-Lösung;
wobei gegebenenfalls in Schritt d) erzeugte weitgehend HBr-freie wäßrige HCl-Lösung in Schritt b) des Verfahrens geführt wird.

2. Verfahren nach Anspruch 1, **dadurch gekennzeichnet, dass** Schritt b) des Verfahrens in einer Bodenkolonne und/oder Schritt d) des Verfahrens in einer Absorptionskolonne durchgeführt werden.

3. Verfahren nach Anspruch 2, **dadurch gekennzeichnet, dass** die in Schritt b) des Verfahrens eingesetzte Bodenkolonne bei einer Flüssigkeitsbelastung unter 2 m³/m²•h betrieben wird.

4. Verfahren nach einem der Ansprüche 1 bis 3, **dadurch gekennzeichnet, dass** Schritt b) des Verfahrens in einer Siebbodenkolonne durchgeführt wird, wobei die Siebböden bevorzugt im wesentlichen aus einem Material ausgewählt aus der Gruppe aus Polyvinylidenfluorid, Polyvinylchlorid, Polyvinylacetat, Polytetrafluorethylen, Perfluoralkoxypolymeren, deren Copolymeren und deren Mischungen bestehen.

5. Verfahren nach einem der Ansprüche 1 bis 4, **dadurch gekennzeichnet, dass** ein Teil der durch Schritt d) erhaltenen wäßrigen HCl-Lösung einer in Schritt d) eingesetzten Absorptionskolonne entnommen, gekühlt und dieser Absorptionskolonne wieder zugeführt wird.

6. Verfahren nach einem der Ansprüche 1 bis 5, **dadurch gekennzeichnet, dass** weitgehend HBr-freie wäßrige HCl-Lösung mit einer Konzentration ≥ 30 Gew.-% HCl hergestellt wird.

7. Verfahren nach einem der Ansprüche 1 bis 6, **dadurch gekennzeichnet, dass** in Schritt b) des Verfahrens das HBr-haltige HCl-Gas im Gegenstrom durch die an HCl gesättigte wäßrige HCl-Lösung geleitet wird.

## Claims

1. A process for preparing HCl gas or aqueous HCl solution, wherein the HBr content of the HCl gas or of the aqueous HCl solution is below 10 ppm and the process comprises the following steps:
a) providing HBr-containing HCl gas;
b) passing the HBr-containing HCl gas through aqueous HCl solution saturated with HCl;
c) separating off HBr-containing aqueous HCl solution saturated with HCl;
d) if appropriate, passing the largely HBr-free HCl gas obtained in step b) into water to obtain largely HBr-free aqueous HCl solution;
with largely HBr-free aqueous HCl solution produced in step d) being able, if appropriate, to be recirculated to step b) of the process.

2. The process according to claim 1, wherein step b) of the process is carried out in a tray column and/or step d) of the process is carried out in an absorption column.

3. The process according to claim 2, wherein the tray column used in step b) of the process is operated at a liquid throughput of less than 2 m³/m²•h.

4. The process according to any of claims 1 to 3, wherein step b) of the process is carried out in a sieve tray column in which the sieve trays preferably consist essentially of a material selected from the group consisting of polyvinylidene fluoride, polyvinyl chloride, polyvinyl acetate, polytetrafluoroethylene, perfluoroalkoxy polymers, their copolymers and their mixtures.

5. The process according to any of claims 1 to 4, wherein part of the aqueous HCl solution obtained by means of step d) is taken from an absorption column used in step d), cooled and returned to this absorption column.

6. The process according to any of claims 1 to 5, wherein largely HBr-free aqueous HCl solution having a concentration of ≥ 30% by weight of HCl is prepared.

7. The process according to any of claims 1 to 6, wherein, in step b) of the process, the HBr-containing HCl gas is passed in countercurrent through the aqueous HCl solution saturated with HCl.

## Revendications

1. Procédé de préparation de gaz HCl ou d'une solution aqueuse de HCl, la teneur en HBr dans le gaz HCl ou, selon le cas, dans la solution aqueuse de HCl étant inférieure à 10 ppm et le procédé présentant les étapes suivantes:
a) disposer de gaz HCl contenant du HBr;
b) conduire le gaz HCl contenant du HBr à travers une solution aqueuse de HCl saturée en HCl;
c) séparer la solution aqueuse de HCl contenant du HBr et saturée en HCl;
d) le cas échéant conduire le gaz HCl largement exempt de HBr obtenu à l'étape b) dans l'eau pour obtenir une solution aqueuse de HCl largement exempte de HBr;
la solution aqueuse de HCl largement exempte de HBr produite le cas échéant à l'étape d) étant conduite à l'étape b) du procédé.

2. Procédé selon la revendication 1, **caractérisé en ce que** l'étape b) du procédé s'effectue dans une colonne à plateaux et/ou l'étape d) du procédé s'effectue dans une colonne d'absorption.

3. Procédé selon la revendication 2, **caractérisé en ce que** la colonne à plateaux utilisée à l'étape b) du procédé fonctionne à une charge de liquide inférieure à 2 m³/m²•h.

4. Procédé selon l'une des revendications 1 à 3, **caractérisé en ce que** l'étape b) du procédé est effectué dans une colonne à plateaux perforés, les plateaux perforés étant de préférence composés essentiellement d'un matériau choisi parmi le groupe des fluorure de polyvinylidène, chlorure de polyvinyle, acétate de polyvinyle, polytétrafluoroéthylène, perfluoroalkoxypolymères, leurs copolymères et leurs mélanges.

5. Procédé selon l'une des revendications 1 à 4, **caractérisé en ce qu'**une partie de la solution aqueuse de HCl obtenue à l'étape d) est prélevée d'une colonne d'absorption utilisée à l'étape d), est refroidie et est à nouveau envoyée à cette colonne d'absorption.

6. Procédé selon l'une des revendications 1 à 5, **caractérisé en ce qu'**une solution aqueuse de HCl largement exempte de HBr est préparée à une concentration ≥ 30% en poids de HCl.

7. Procédé selon l'une des revendications 1 à 6, **caractérisé en ce qu'**à l'étape b) du procédé, le gaz HCl contenant du HBr est conduit à contre-courant à travers la solution aqueuse de HCl saturée en HCl.
